# EUROPEAN PATENT SPECIFICATION

(11) **EP 3 763 769 B1**
(45) Date of publication and mention of the grant of the patent: **27.07.2022**
(21) Application number: 20206350.9
(22) Date of filing: 09.11.2020
(51) Int. Cl.: C08G 69/26, C08G 69/40, D01F 6/80, C08G 69/36, D01F 6/90, D01F 1/10

(54) **METHOD FOR PREPARING COPOLYAMIDE RESIN AND COPOLYAMIDE HOT-MELT YARN**
VERFAHREN ZUR HERSTELLUNG EINES COPOLYAMIDHARZES UND COPOLYAMID-HEISSSCHMELZGARN
PROCÉDÉ DE LA PRÉPARATION D'UNE RÉSINE COPOLYAMIDE ET FILE THERMOFUSIBLE COPOLYAMIDE

(43) Date of publication of application: 13.01.2021
(73) Proprietor: Wenzhou University, Wenzhou, Zhejiang 325035 (CN)
(72) Inventor: ZHANG, Weilu, Wenzhou City, Zhejiang 325035 (CN); ZHENG, Yipeng, Wenzhou City, Zhejiang 325035 (CN); ZHENG, Jiaxing, Wenzhou City, Zhejiang 325035 (CN); LIU, Ruowang, Wenzhou City, Zhejiang 325035 (CN); FAN, Hongbin, Wenzhou City, Zhejiang 325035 (CN)
(74) Representative: Huang, Liwei

(56) References cited:
- CN-A- 109 536 119
- US-A1- 2019 300 642
- DATABASE WPI Week 201570 Thomson Scientific, London, GB; AN 2015-51899M XP002801250, & CN 104 746 167 A (SHANDONG GUANGYIN MATERIALS CO LTD) 1 July 2015 (2015-07-01)

## Description

### FIELD OF THE INVENTION

The present invention relates to a method for preparing copolyamide resin and copolyamide hot-melt yarn.

### BACKGROUND

Hot-melt yarns make fabrics excellent thermal bonding properties, stable processability and excellent overall effect, enhance the quality of end products such as clothing, shoes and hats, expand the applications of textile fabrics, and accelerate the development of new products in the downstream industry. In addition, it promotes the rapid development of the upstream raw material polyamide polymer material industry, to achieve effective combination of upstream and downstream industries. With the emergence and application of hot-melt yarns, the product nature and boundaries are redefined, which actively promotes the development of new products, and provides strong support for innovation and entrepreneurship. It will definitely bring new vitality and economic growth points to traditional light industries such as clothing and shoemaking, etc.

In recent years, with the increase in the demand of flying woven fabrics, attention has been paid to special nylon hot-melt yarn materials. Patents related to nylon hot-melt yarn resin, such as US201816165700 discloses a conductive hot melt adhesive comprising polyamide, thermoplastic polyamide or copolyamide; US201816139909 discloses a copolyamide resin for fiber composite components; US201816126851 discloses a copolyamide resin hot melt film containing nano-silica; Shanghai Tianyang Hot Melt Adhesive Material Co., Ltd. CN109536119A discloses a copolyamide hot melt adhesive with elastic recovery and a preparation method thereof; CN109467695A discloses a method for preparing high-temperature resistant copolyamide.

CN 104 746 167 A (DATABASE WPI Week 201570 Thomson Scientific, London, GB; AN 2015-51899M & CN 104 746 167 A) discloses a preparation method of low-melting-point copolymer having copolyamide blocks and polyether blocks, comprises the following steps:
(1) adding caprolactam, two or more kinds of C6-C13 aliphatic diamines, and two or more kinds of C6-C18 aliphatic dibasic acids into a reaction kettle; simultaneously adding water, chain limiting agent and stabilizer; vacuum pumping to - 0.099 MPa, filling nitrogen until 0.15 MPa, heating until the temperature reaches 200° C, keeping the pressure to be 1.0-1.2 MPa, stirring and reacting for 1-2 hours, continuously heating to 240° C; after 2 hours, reducing the pressure to an atmospheric pressure, continuously reacting for 0.5-1.0 hour, vacuum pumping to - 0.099 MPa, continuously reacting for 1-2 hours, obtaining copolyamide segments; where chain limiting agent is succinic acid, glutaric acid, adipic acid, sebacic acid and/or dodecanedioic acid, and stabilizer is phosphoric acid, phosphorous acid and/or hypophosphoric acid;
(2) adding polyether glycol, catalyst, antioxidant and crosslinking agent; in a vacuum of less than 30 pa and at a temperature of 200-220° C, stirring and reacting for 1.5-3 hours, discharging, cooling, and obtaining copolymer of copolyamide blocks and polyether blocks.

At present, the industrial production of copolyamides such as nylon 66 (PA66) and nylon 6 (PA6) copolymer (PA66/6) has been realized, and several brands of general-purpose copolyamide resin have been developed successively, such as Vydyne^{®}88X and Vydyne^{®} 86XFS, Vydyne^{®}85XFS, Vydyne^{®}00XFS from ASCEND; and STABAMID^{®}25RS from Solvay Group. However, these resins have the drawbacks such as low elasticity and high melting point, etc. which cannot meet the requirements of hot-melt yarn special materials. To solve these problems, the present invention provides a special resin for nylon hot-melt yarns.

### SUMMARY

The first object of the present invention is to provide a method for preparing copolyamide resin.

The second object of the present invention is to provide a method for preparing copolyamide hot-melt yarn.

In order to achieve the above objects, the present invention provides the following technical solutions:
In the first aspect, the present invention provides a method for preparing copolyamide resin, wherein raw materials for preparing copolyamide resin include the following components, and the amount of each component is expressed in parts by weight:
even dibasic acid: 5-30 parts
even diamine: 10-40 parts
odd dibasic acid or diamine: 5-15 parts
cyclic lactam: 0-30 parts
elasticity regulator: 1-200 parts
the elasticity regulator is selected from elasticity regulator A and/or elasticity regulator B;
the method for preparing copolyamide resin comprises the following steps:
   (1) preparation of elasticity regulator
      adding propylene oxide into a reactor with a sulfur-containing compound with a molar ratio of propylene oxide to the sulfur-containing compound at 2-20:1, to react for 6-10h at a reaction temperature of 120-170°C and a reaction pressure of 0.4-1.2MPa, then subjecting reaction mixture to post-treatment to obtain the elasticity regulator A;
      introducing ethylene oxide into a reactor with the elasticity regulator A with a molar ratio of ethylene oxide to the sulfur-containing compound at 2-20:1, to react for 5-8h at a reaction temperature of 100-150°C and a pressure of 0.4 -1.2MPa, then subjecting reaction mixture to post-treatment to obtain the elasticity regulator B;.
      wherein the molecular formula of the sulfur-containing compound is X(CH₂)_{c}-S-S-(CH₂)_{c}X, wherein, X is NH₂, COOH or OH, and c is an integer from 2 to 16, preferably c=2 to 6;
   (2) preparation of copolyamide resin:
      putting even dibasic acid, even diamine, odd dibasic acid or diamine, and cyclic lactam into a reactor, heating the mixture to 100-160°C, stirring at 100-500r/min, and reacting for 0.5-5h; then putting the elasticity regulator into the reactor and continuing to heat the mixture to 180-280°C, after reacting for 0.5-10h, reducing the temperature to 50-180°C, and turning on the vacuum to -0.05~-0.1MPa, removing all the distillate in the reactor, then turning off the vacuum, and then performing discharging, granulation , drying and packaging to obtain copolyamide resin.

Preferably, the even dibasic acid is at least one of dodecanedioic acid, sebacic acid, suberic acid, adipic acid, succinic acid, and oxalic acid.

Preferably, the even diamine is at least one of dodecane diamine, diaminodecane, diaminooctane, diaminohexane, diaminobutane, and ethylenediamine.

Preferably, the odd dibasic acid is at least one of azelaic acid, pimelic acid, glutaric acid, and malonic acid.

Preferably, the odd diamine is at least one of diaminononane, diaminoheptane, diaminopentane, and diaminopropane.

Preferably, the cyclic lactam is at least one of enanthrolactam, caprolactam, and azacyclononanone.

Preferably, the amount of the cyclic lactam is 10-20 parts by weight.

In the present invention, the sulfur-containing compound can be prepared by methods reported in the literatures, for example, prepared according to (Lu Wei, Preparation and Discussion of DL-cystine [J], Amino Acids&Biotic Resource2010, 32(3): 49-51).

The molecular formula of the elasticity regulator A is:

X(CH₂)ₙ(OCH(CH₃)CH₂)ₓ(CH₂)ₘ-S-S-(CH₂)ₘ(OCH(CH₃)CH₂)ₓ(CH₂)ₙX,

where n+m=c;

The molecular formula of the elasticity regulator B is:

X(CH₂)ₙ(C₂H₄O)ₓ(OCH(CH₃)CH₂)_{y}(CH₂)ₘ-S-S-(CH₂)ₙ(C₂H₄O)ₓ(OCH(CH₃)CH₂)_{y}(CH₂)ₘX,

where n+m=c.

In step (1) of the present invention, the post-treatment specifically adopts the following procedures: at the end of reaction, cool the reaction mixtrue and transfer it to a neutralization reactor, add a certain concentration of phosphoric acid for neutralization, when the pH is close to neutral, pass the mixture through the molecular sieve filter at a certain flow rate and transfer the filtrate to a distillation device, to remove the water by reduced pressure distillation.

In the second aspect, the present invention provides a method for preparing copolyamide hot-melt yarn, comprising the following steps:
heating the copolyamide resin in an extruder to melt to obtain a spinning dope, subjecting the spinning dope to spinning in a spinning box, cooling the formed fiber filaments to 40-100°C by air, and then passing them through at least one solvent tank containing elasticity regulator C, with the tank temperature of 40-80°C and residence time of the fiber filaments in the tank of 0.5-60s, then subjecting the fiber filaments out of the solvent tank to drying, drawing, setting, and winding to obtain copolyamide hot -melt yarn;
wherein the elasticity regulator C is selected from at least one of mercapto organic acid compounds and/or tributyl phosphine, wherein the mercapto organic acid compound is selected from the following: (a) mercapto organic acids, with the general formula of SH(CH₂)ₙCOOH; (b) mercapto organic acid salts, with the general formula of SH(CH₂)ₙCOOM, where M is an alkali metal element (preferably Na or K); (c) mercapto organic acid esters, with the general formula of SHCH₂COO(CH₂)ₙCH₃; where n is 1-10, preferably 1-5;
the fiber filaments need to be treated with the mercapto organic acid compound(s) and then treated with tributyl phosphine, or placed in a mixed solvent of the mercapto organic acid compound(s) and tributyl phosphine for treatment.

In the present invention, the fiber filaments pass through at least one solvent tank containing the elasticity regulator C. When the mercapto organic acid compound is liquid at 40-80°C, it is recommended to perform as follows: pass them through a solvent tank containing a mixed solvent of tributyl phosphine and mercapto organic acid compound(s), or firstly pass the fiber filaments through a solvent tank containing the mercapto organic acid compound(s), then pass them through a solvent tank containing tributyl phosphine or a mixed solvent of tributyl phosphine and mercapto organic acid compound(s), and then dry them. When the mercapto organic acid compound is mercapto organic acid salt, it is recommended to perform as follows: pass the fiber filaments through a solvent tank containing an aqueous solution of the mercapto organic acid salt, and then pass them through a solvent tank containing tributyl phosphine or a mixed solvent of tributyl phosphine and mercapto organic acid compound(s). The solvent tank herein is a conventional temperature-resistant, acid- and alkali-resistant PTFE lined sealed tank. The residence time of the fiber filaments in the tank is determined by the traction speed. Preferably, the residence time in the solvent tank is 1-30s.

Preferably, the cooling conditions are: wind speed of 0.5-1.5 m/s, temperature of 12-20°C.

Preferably, the speed for drawing is 500-3000 m/min.

Compared with the prior art, the present invention can achieve the following beneficial effects:
(1) The copolyamide resin herein has the advantage of low melting point and good elasticity.
(2) The method for preparing copolyamide resin herein can ensure that the melting point of the copolyamide resin is lowered and its elasticity is increased.
(3) The copolyamide hot-melt yarn herein has the advantages of good elastiuciuty and low bonding temperature.

### DETAILED DESCRIPTION

The technical solutions of the present invention will be further described in conjunction with specific embodiments, but the protection scope of the present invention is not limited hereto.

### Example 1:

To a pressure reactor, 40.00kg of propylene oxide and 15.2kg of NH₂(CH₂)₂-S-S-(CH₂)₂NH₂ were added to react for 6 h at a reaction temperature of 120°C and a reaction pressure of 0.4MPa. After reaction, the mixture was cooled to 70°C and transferred to a neutralization reactor, and 1% (mass percent) phosphoric acid aqueous solution was added, and the resulting solution was stirred while keeping the temperature constant, when the solution achieved neutral, the mixture was filtered through a molecular sieve filter at a flow rate of 5kg/min and the filtrate was transferred to a distillation device, after vacuum distillation to remove water, elasticity regulator A1 was obtained. Then the resulting elasticity regulator A1 was transferred to a pressure reactor, and 30.50kg of ethylene oxide and 100 kg of deionized water were added to react for 5 h at a reaction temperature of 100°C and a reaction pressure of 0.4MPa, after the reaction, the reaction mixture was cooled to 60°C, and 1% (mass percent) phosphoric acid aqueous solution was added, and the resulting solution was stirred while keeping the temperature constant, when the solution was neutral, the mixture was filtered through a molecular sieve filter at a flow rate of 5kg/min and the filtrate was transferred to a distillation device, then slowly heated to 110 ~ 120°C, and dehydrated in vacuum to obtain elasticity regulator B1.

### Example 2:

The procedures were the same as Example 1 except that the addition amount of propylene oxide was changed to 75.40kg, to obtain elasticity regulator A2 and elasticity regulator B2.

### Example 3:

The procedures were the same as Example 1 except that NH₂(CH₂)₂-S-S-(CH₂)₂NH₂ was changed to 26.4g of NH₂(CH₂)₆-S-S-(CH₂)₆NH₂, the addition amount of propylene oxide was changed to 75.40kg, and the addition amount of ethylene oxide was changed to 57.20kg, to obtain elasticity regulator A3 and elasticity regulator B3.

### Example 4:

The procedures were the same as Example 1 except that NH₂(CH₂)₂-S-S-(CH₂)₂NH₂ was changed to 25.4g of NH₂(CH₂)₆-S-S-(CH₂)₆NH₂, and the addition amount of ethylene oxide was changed to 57.20kg, to obtain elasticity regulator A4 and elasticity regulator B4.

### Example 5:

The procedures were the same as Example 1 except that the addition amount of propylene oxide was changed to 52.00 kg, and the addition amount of ethylene oxide was changed to 39.00kg, to obtain elasticity regulator A5 and elasticity regulator B5.

### Example 6:

To a pressure reactor, 75.40kg of propylene oxide and 32.20kg of COOH(CH₂)₆-S-S-(CH₂)₆COOH were added to react for 10 h at a reaction temperature of 170°C and a reaction pressure of 1.2 MPa. After reaction, the mixture was cooled to 70°C and transferred to a neutralization reactor, and 1% (mass percent) phosphoric acid aqueous solution was added, and the resulting solution was stirred while keeping the temperature constant, when the solution was neutral, the mixture was filtered through a molecular sieve filter at a flow rate of 5kg/min and the filtrate was transferred to a distillation device, after vacuum distillation to remove water, elasticity regulator A6 was obtained. To the reactor, 57.20kg of ethylene oxide was added to react for 8 h at a reaction temperature of 150°C and a reaction pressure of 1.2 MPa, after the reaction, the reaction mixture was cooled to 60°C, and 1% (mass percent) phosphoric acid aqueous solution was added, and the resulting solution was stirred while keeping the temperature constant, when the solution was neutral, the mixture was filtered through a molecular sieve filter at a flow rate of 5kg/min and the filtrate was transferred to a distillation device, then slowly heated to 110 ~ 120°C, and dehydrated in vacuum to obtain elasticity regulator B6.

### Example 7:

The procedures were the same as Example 6 except that COOH(CH₂)₆-S-S-(CH₂)₆COOH was changed to 21.00kg COOH(CH₂)₂-S-S-(CH₂)₂COOH, the addition amount of propylene oxide was changed to 40.00 kg, and the addition amount of ethylene oxide was changed to 30.50 kg, to obtain elasticity regulator A7 and elasticity regulator B7.

### Example 8:

The procedures were the same as Example 6 except that COOH(CH₂)₆-S-S-(CH₂)₆COOH was changed to 21.00kg COOH(CH₂)₂-S-S-(CH₂)₂COOH, and the addition amount of ethylene oxide was changed to 30.50 kg, to obtain elasticity regulator A8 and elasticity regulator B8.

### Example 9:

The procedures were the same as Example 6 except that COOH(CH₂)₆-S-S-(CH₂)₆COOH was changed to 21.00kg COOH(CH₂)₂-S-S-(CH₂)₂COOH, and the addition amount of propylene oxide was changed to 40.00 kg, to obtain elasticity regulator A9 and elasticity regulator B9.

### Example 10:

The procedures were the same as Example 6 except that COOH(CH₂)₆-S-S-(CH₂)₆COOH was changed to 26.60kg COOH(CH₂)₄-S-S-(CH₂)₄COOH, the addition amount of propylene oxide was changed to 52.00 kg, and the addition amount of ethylene oxide was changed to 39.00 kg, to obtain elasticity regulator A10 and elasticity regulator B10.

### Example 11:

The procedures were the same as Example 6 except that COOH(CH₂)₆-S-S-(CH₂)₆COOH was changed to 21.00kg COOH(CH₂)₂-S-S-(CH₂)₂COOH, the addition amount of propylene oxide was changed to 52.00 kg, and the addition amount of ethylene oxide was changed to 39.00 kg, to obtain elasticity regulator A11 and elasticity regulator B11.

### Example 12:

The procedures were the same as Example 6 except that the addition amount of propylene oxide was changed to 40.00 kg, to obtain elasticity regulator A12 and elasticity regulator B12.

### Example 13:

To a pressure reactor, 75.40kg of propylene oxide and 15.4kg of OH(CH₂)₂-S-S-(CH₂)₂OH were added to react for 8 h at a reaction temperature of 150°C and a reaction pressure of 0.8 MPa. After reaction, the mixture was cooled to 70°C and transferred to a neutralization reactor, and 1% (mass percent) phosphoric acid aqueous solution was added, and the resulting solution was stirred while keeping the temperature constant, when the solution was neutral, the mixture was filtered through a molecular sieve filter at a flow rate of 5kg/min and the filtrate was transferred to a distillation device, after vacuum distillation to remove water, elasticity regulator A13 was obtained. To the reactor, 57.20kg of ethylene oxide was added to react for 6 h at a reaction temperature of 120°C and a reaction pressure of 0.6 MPa, after the reaction, the reaction mixture was cooled to 60°C, and 1% (mass percent) phosphoric acid aqueous solution was added, and the resulting solution was stirred while keeping the temperature constant, when the solution was neutral, the mixture was filtered through a molecular sieve filter at a flow rate of 5kg/min and the filtrate was transferred to a distillation device, then slowly heated to 110 ~ 120°C, and dehydrated in vacuum to obtain elasticity regulator B13.

### Comparative Example 1:

To a reactor, 7.3 kg of adipic acid, 11.6 kg of diaminohexane, 11.3 kg of caprolactam, and 6.6 kg of glutaric acid were added, and heated to 120°C, and stirred to react for 3h at a rate of 300r/min; and then continuously heated to 260°C to react for 1h, then cooled to 100°C, and vacuumized to -0.07MPa until no distillate flowed out, and the reaction was stopped, discharging, pelletizing, and drying were carried out to obtain a copolyamide resin. A performance test was conducted with reference to the industry standard HG/T3697-2016 *Hot-melt adhesives for textiles.* The test results were shown in Table 1.

The above resin was heated to 250°C in an extruder to obtain the spinning dope, and it was spun in a spinning box. The formed fiber filaments were blow-cooled (wind speed 1.0m/s, temperature 12°C) to 120°C, and then drawn (drawing speed 2000m/min). set and wound, to obtain ordinary hot-melt yarns. Tests were carried out with reference to FZ/T50038-2017 *Lower melting point polyester(PET) composite fibers-Test method for bonding temperature* and FZ/T52051-2018 *Low melting point polyester(LMPET)*/*polyester(PET) bicomponent staple fiber.* The test results were shown in Table 1.

### Comparative Example 2:

To a reactor, 7.3 kg of adipic acid, 5.8 kg of diaminohexane, 11.3 kg of caprolactam, and 6.6 kg of glutaric acid were added, and heated to 120°C, and stirred to react for 3h at a rate of 300r/min; and 25.0kg of elasticity regulator A1 was added and continuously heated to 230°C to react for 2h, then cooled to 100°C, and vacuumized to -0.1MPa until no distillate flowed out, and the reaction was stopped, discharging, pelletizing, drying and packaging were carried out to obtain a copolyamide resin. A performance test was conducted with reference to the standard in the Comparative Example 1. The test results were shown in Table 1.

### The above copolyamide resin was heated to 150°C in an extruder to obtain the spinning dope, and it was spun in a spinning box. The formed fiber filaments were blow-cooled (wind speed 1.0m/s, temperature 12°C) to 80°C, and then drawn (drawing speed 2000m/min), set and wound, to obtain modified hot-melt yarns.

A performance test was conducted with reference to the standards in the Comparative Example 1. The test results were shown in Table 1.

### Comparative Example 3:

The procedures were the same as Comparative Example 2 except that elasticity regulator A1 was changed to 25.0kg of NH₂(CH₂)₂-S-S-(CH₂)₂NH₂.

### Comparative Example 4:

The procedures were the same as Comparative Example 2 except that elasticity regulator A1 was changed to 25.0kg of elasticity regulator A6.

### Comparative Example 5:

The procedures were the same as Comparative Example 2 except that elasticity regulator A1 was changed to 25.0kg of elasticity regulator B6.

### Comparative Example 6:

The procedures were the same as Comparative Example 2 except that elasticity regulator A1 was changed to 25.0kg of COOH(CH₂)₆-S-S-(CH₂)₆COOH.

### Example 14:

To a reactor, 7.3 kg of adipic acid, 5.8 kg of diaminohexane, 11.3 kg of caprolactam, and 6.6 kg of glutaric acid were added, and heated to 120°C, and stirred to react for 3h at a rate of 300r/min; and 25.0kg of elasticity regulator A1 was added and continuously heated to 230°C to react for 2h, then cooled to 100°C, and vacuumized to -0.1MPa until no distillate flowed out, and the reaction was stopped, discharging, pelletizing, drying and packaging were carried out to obtain a copolyamide resin. A performance test was conducted with reference to the standard in the Comparative Example 1. The test results were shown in Table 1.

The above copolyamide resin was heated to 150°C in an extruder to obtain the spinning dope, and it was spun in a spinning box. The formed fiber filaments were blow-cooled (wind speed 1.0m/s, temperature 12°C) to 80°C, passed through a mixed solvent tank of 2.4 kg of ethyl mercaptoacetate and 1.0 kg of tributyl phosphine at 70°C for 20s, dried, then drawn at a speed of 2000m/min, set and wound, to obtain modified hot-melt yarns.

A performance test was conducted with reference to the standards in the Comparative Example 1. The test results were shown in Table 1.

### Example 15:

To a reactor, 7.3 kg of adipic acid, 5.8 kg of diaminohexane, 11.3 kg of caprolactam, and 6.6 kg of glutaric acid were added, and heated to 120°C, and stirred to react for 3h at a rate of 300r/min; and 25.0kg of elasticity regulator B1 was added and continuously heated to 230°C to react for 2h, then cooled to 100°C, and vacuumized to -0.1MPa until no distillate flowed out, and the reaction was stopped, discharging, pelletizing, drying and packaging were carried out to obtain a copolyamide resin. A performance test was conducted with reference to the standard in the Comparative Example 1. The test results were shown in Table 1.

The above copolyamide resin was heated to 150°C in an extruder to obtain the spinning dope, and it was spun in a spinning box. The formed fiber filaments were blow-cooled (wind speed 1.0m/s, temperature 12°C) to 80°C, passed through a mixed solvent tank of 2.4 kg of ethyl mercaptoacetate and 1.0 kg of tributyl phosphine at 70°C for 20s, dried, then drawn at a speed of 2000m/min, set and wound, to obtain modified hot-melt yarns.

A performance test was conducted with reference to the standards in the Comparative Example 1. The test results were shown in Table 1.

### Example 16:

To a reactor, 7.3 kg of adipic acid, 34.4 kg of diaminohexane, 22.6 kg of caprolactam, and 10.4 kg of malonic acid were added, and heated to 150°C, and stirred to react for 3h at a rate of 200r/min; 38.2 kg of elasticity regulator B1 and 82.2 kg of elasticity regulator B7 were added respectively, and continuously heated to 260°C to react for 5h, then cooled to 180°C, and vacuumized to -0.07MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 170°C in an extruder to obtain the spinning dope, and it was spun in a spinning box. The formed fiber filaments were blow-cooled (wind speed 1.5 m/s, temperature 13°C) to 50°C, passed through a mixed solvent tank of 2.7 kg of ethyl mercaptoacetate and 1.0 kg of tributyl phosphine (molar ratio of 2:1) at 50°C for 20s, dried, then drawn at a speed of 2000m/min,set and wound, to obtain modified hot-melt yarns.

A performance test was conducted with reference to the standards in the Comparative Example 1. The test results were shown in Table 1.

### Example 17:

To a reactor, 7.3 kg of adipic acid, 20.0kg of 1,12-dodecane diamine, 33.9 kg of caprolactam, and 13.2 kg of glutaric acid were added, and heated to 100°C, and stirred to react for 2h at a rate of 300r/min; and 111.2kg of elasticity regulator B2 and 58.5kg of elasticity regulator B8 were added successively and continuously heated to 180°C to react for 3h, then cooled to 100°C, and vacuumized to -0.07 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 110°C in an extruder to obtain the spinning dope, and it was spun in a spinning box. The formed fiber filaments were blow-cooled (wind speed 1.5 m/s, temperature 13°C) to 50°C, passed through a sodium thioglycolate aqueous solution tank at 50°C (aqueous solution concentration of 90%, sodium thioglycolate content of 0.228kg) for 15s and then passed through a solvent tank of tributyl phosphine 1.0kg at 50°C for 15s, dried, then drawn at a speed of 2500m/min, set and wound, to obtain modified hot-melt yarns.

A performance test was conducted with reference to the standard in the Comparative Example 1. The test results were shown in Table 1.

### Example 18:

To a reactor, 23.0kg of dodecanedioic acid, 17.4kg of diaminohexane, 14.1kg of azacyclononanone, and 8.0kg of pimelic acid were added, and heated to 138°C, and stirred to react for 2h at a rate of 280r/min, and 7.44 kg of elasticity regulator B3 and 7.73kg of elasticity regulator B6 were added successively and continuously heated to 220°C to react for 3h, then cooled to 90°C, and vacuumized to -0.1 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 112°C in an extruder to obtain the spinning dope, and it was spun in a spinning box. The formed fiber filaments were blow-cooled (wind speed 1.5 m/s, temperature 15°C) to 52°C, successively passed through a 6-mercaptohexanoic acid (0.296kg) solvent tank at 50°C for 10s, and a tributyl phosphine (1.0kg) solvent tank at 50°C for 10s, dried, then drawn at a speed of 2000m/min, set and wound, to obtain modified hot-melt yarns.

A performance test was conducted with reference to the standard in the Comparative Example 1. The test results were shown in Table 1.

### Example 19:

To a reactor, 7.3kg of adipic acid, 10.0kg of 1,12-dodecane diamine, 5.8 kg of diaminohexane, 12.5 kg of dodecanedioic acid, 9.4kg of azelaic acid and 9.9 kg of 2-azahexanone were added, and heated to 128°C, and stirred to react for 2h at a rate of 350r/min, and 12.38kg of elasticity regulator B12 and 11.8kg of elasticity regulator B4 were added successively and continuously heated to 230°C to react for 4h, then cooled to 120°C, and vacuumized to -0.1 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 125°C in an extruder to obtain the spinning dope, and it was spun in a spinning box. The formed fiber filaments were blow-cooled (wind speed 1.5 m/s, temperature 15°C) to 60°C, successively passed through a isooctyl 6-mercaptoacetate (2.0kg) solvent tank at 60°C for 20s, and a tributyl phosphine (10.1 kg) solvent tank at 50°C for 10s, dried, then drawn at a speed of 2000m/min, set and wound, to obtain modified hot-melt yarns.

A performance test was conducted with reference to the standard in the Comparative Example 1. The test results were shown in Table 1.

### Example 20:

To a reactor, 10.0kg of 1,12-dodecane diamine, 12.5kg of dodecanedioic acid , 3.3kg of glutaric acid, 4.0kg of pimelic acid , and 14.1kg of azacyclononanone were added, and heated to 150°C, and stirred to react for 2.5 h at a rate of 300r/min, and 5.41kg of elasticity regulator B10 and 4.84kg of elasticity regulator B5 were added successively and continuously heated to 200°C to react for 5h, then cooled to 80°C, and vacuumized to -0.08 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 120°C in an extruder to obtain the spinning dope, and it was spun in a spinning box. The formed fiber filaments were blow-cooled (wind speed 1.5 m/s, temperature 14°C) to 60°C, successively immersed in a sodium thioglycolate aqueous solution tank (90% by concentration) at 60°C for a residence time of 5s, and then immersed in a mixed solution tank of butyl thioglycolate and tributyl phosphine with a molar ratio of 2:1 at 50°C for the residence time of 1s, and blown to dry, then drawn at a speed of 2800 m/min, set and wound, to obtain modified hot-melt yarns.

A performance test was conducted with reference to the standard in the Comparative Example 1. The test results were shown in Table 1.

### Example 21:

To a reactor, 15.8 kg of 1,9-diaminononane, 7.3 kg of adipic acid, 1.6 kg of pimelic acid, and 22.6 kg of caprolactam were added, and heated to 150°C, and stirred to react for 3 h at a rate of 400r/min, and 13.78 kg of elasticity regulator B13, 8.22 kg of elasticity regulator B7, 76.4 kg of elasticity regulator B1 were added successively and continuously heated to 220°C to react for 3h at a stirring rate of 400r/min, then cooled to 80°C, and vacuumized to -0.1 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 120°C in an extruder to obtain the spinning dope, and it was spun in a spinning box. The formed fiber filaments were blow-cooled (wind speed 1.5 m/s, temperature 14°C) to 50°C, successively immersed in a potassium thioglycolate aqueous solution tank (90% by concentration) at 50°C for a residence time of 3s, and then immersed in a mixed solvent tank of butyl thioglycolate and tributyl phosphine with a molar ratio of 2:1 at 50°C for the residence time of 3s, and blown to dry, then drawn at a speed of 2200 m/min, set and wound, to obtain modified hot-melt yarns.

A performance test was conducted with reference to the standard in the Comparative Example 1. The test results were shown in Table 1.

### Example 22:

To a reactor, 18.8kg of1,9-azelaic acid, 11.6kg of diaminohexane , 3.96kg of glutaric acid, 22.6kg of caprolactam were added, and heated to 130°C, and stirred to react for 2 h at a rate of 300r/min, and 8.5kg of elasticity regulator A13, 9.6kg of elasticity regulator A3 and 9.68kg of elasticity regulator B5 were added successively and continuously heated to 220°C to react for 10h, then cooled to 90°C, and vacuumized to -0.08 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 130°C in an extruder to obtain the spinning dope, and it was spun in a spinning box. The formed fiber filaments were blow-cooled (wind speed 1.5 m/s, temperature 12°C) to 50°C, successively immersed in a potassium thioglycolate aqueous solution tank (90% by concentration) at 50°C for a residence time of 2s, and then immersed in a mixed solution of butyl thioglycolate and tributyl phosphine with a molar ratio of 1:1 at 45°C for the residence time of 2s, and blown to dry, then drawn at a speed of 1000 m/min, set and wound, to obtain modified hot-melt yarns.

A performance test was conducted with reference to the standard in the Comparative Example 1. The test results were shown in Table 1.

### Example 23:

To a reactor, 23.0kg of dodecanedioic acid, 17.2kg of 1,10-diaminodecane, and 3.9kg of 1,7-diaminoheptane were added, and heated to 148°C, and stirred to react for 0.5 h at a rate of 200r/min, and 9.06kg of elasticity regulator A8, 10.26kg of elasticity regulator B11 and 6.70kg of elasticity regulator A12 were added successively and continuously heated to 220°C to react for 6h, then cooled to 80°C, and vacuumized to -0.1 MPa until no distillate flowed out, and the reaction was stopped, discharging, pelletizing, drying and packaging were carried out to obtain a copolyamide resin.

A performance test was conducted with reference to the standard in the Comparative Example 1. The test results were shown in Table 1.

The above copolyamide resin was heated to 120°C in an extruder to obtain the spinning dope, and it was spun in a spinning box. The formed fiber filaments were blow-cooled (wind speed 0.5 m/s, temperature 12°C) to 40°C, successively immersed in an ethyl mercaptoacetate solvent tank at 40°C for 3s, then immersed in a tributyl phosphine solvent tank at 40°C for 5s, and blown to dry, then drawn at a speed of 800 m/min, set and wound, to obtain modified hot-melt yarns.

A performance test was conducted with reference to the standard in the Comparative Example 1. The test results were shown in Table 1.

### Example 24:

To a reactor, 7.3 kg of adipic acid, 5.8 kg of diaminohexane, 11.3 kg of caprolactam, and 6.6 kg of glutaric acid were added, and heated to 120°C, and stirred to react for 3 h at a rate of 300r/min, and 25.0kg of elasticity regulator A6 was added and continuously heated to 230°C to react for 2h, then cooled to 100°C, and vacuumized to -0.1 MPa until no distillate flowed out, and the reaction was stopped, discharging, pelletizing, drying and packaging were carried out to obtain a copolyamide resin. A performance test was conducted with reference to the standard in the Comparative Example 1. The test results were shown in Table 1.

The above copolyamide resin was heated to 150°C in an extruder to obtain the spinning dope, and it was spun in a spinning box. The formed fiber filaments were blow-cooled (wind speed 1.0 m/s, temperature 12°C) to 80°C, then passed through a mixed solvent tank of 2.4 kg of ethyl mercaptoacetate and 1.0 kg of tributyl phosphine at 70°C for 20s and dried, then drawn at a speed of 2000 m/min, set and wound, to obtain modified hot-melt yarns.

A performance test was conducted with reference to the standard in the Comparative Example 1. The test results were shown in Table 1.

### Example 25

To a reactor, 7.3 kg of adipic acid, 5.8 kg of diaminohexane, 11.3 kg of caprolactam, and 6.6 kg of glutaric acid were added, and heated to 120°C, and stirred to react for 3 h at a rate of 300r/min, and 25.0kg of elasticity regulator B6 was added and continuously heated to 230°C to react for 2h, then cooled to 100°C, and vacuumized to -0.1 MPa until no distillate flowed out, and the reaction was stopped, discharging, pelletizing, drying and packaging were carried out to obtain a copolyamide resin. A performance test was conducted with reference to the standard in the Comparative Example 1. The test results were shown in Table 1.

The above copolyamide resin was heated to 150°C in an extruder to obtain the spinning dope, and it was spun in a spinning box. The formed fiber filaments were blow-cooled (wind speed 1.0 m/s, temperature 12°C) to 80°C, then passed through a mixed solvent tank of 2.4 kg of ethyl mercaptoacetate and 1.0 kg of tributyl phosphine at 70°C for 20s and dried, then drawn at a speed of 2000 m/min, set and wound, to obtain modified hot-melt yarns.

A performance test was conducted with reference to the standard in the Comparative Example 1. The test results were shown in Table 1.

**Table 1 Performance of copolyamide resin and hot-melt yarn**

| Examples | resin | | | hot-melt yarn | | |
|---|---|---|---|---|---|---|
| | Micro melting point/°C | Melt flow rate/g·10 min⁻¹ | Glass transition temperatur e/°C | Bonding temperat ure/°C | Elonga tion at break/ % | Breaking strength (cN/dtex) |
| Comparative Example 1 | 190-195 | 40.8 | 120.5 | 190.3 | 19 | 6.8 |
| Comparative Example 2 | 150-155 | 46.7 | 85.2 | 150.1 | 42 | 5.4 |
| Comparative Example 3 | 193-198 | 42.9 | 125.1 | 193.3 | 30 | 5.6 |
| Example 14 | 80-85 | 20.2 | 67.9 | 80.4 | 60 | 5.0 |
| Example 15 | 85-90 | 21.5 | 65.3 | 85.6 | 68 | 5.1 |
| Example 16 | 82-87 | 18.3 | 60.2 | 82.5 | 73 | 5.0 |
| Example 17 | 75-80 | 19.8 | 63.1 | 75.8 | 74 | 5.1 |
| Example 18 | 76-81 | 17.4 | 65.8 | 76.7 | 76 | 5.2 |
| Example 19 | 78-83 | 18.8 | 67.1 | 78.6 | 78 | 5.2 |
| Example 20 | 81-86 | 19.2 | 69.0 | 81.0 | 75 | 5.2 |
| Example 21 | 80-85 | 18.7 | 68.9 | 80.3 | 76 | 5.3 |
| Example 22 | 79-84 | 17.3 | 68.1 | 79.7 | 78 | 5.2 |
| Example 23 | 82-87 | 12.1 | 70.2 | 82.5 | 80 | 5.2 |
| Example 24 | 81-86 | 16.8 | 65.2 | 80.1 | 92 | 6.0 |
| Example 25 | 80-83 | 15.1 | 66.7 | 78.4 | 95 | 6.1 |

## Claims

1. A method for preparing copolyamide resin, wherein raw materials for preparing copolyamide resin include the following components, and the amount of each component is expressed in parts by weight:
even dibasic acid: 5-30 parts,
even diamine: 10-40 parts,
odd dibasic acid or diamine: 5-15 parts,
cyclic lactam: 0-30 parts, and
elasticity regulator: 1-200 parts;
wherein the elasticity regulator is selected from elasticity regulator A and/or elasticity regulator B;
the method for preparing copolyamide resin comprises the following steps:
(1) preparation of elasticity regulator
adding propylene oxide into a reactor with a sulfur-containing compound with a molar ratio of propylene oxide to the sulfur-containing compound at 2-20:1, to react for 6-10h at a reaction temperature of 120-170°C and a reaction pressure of 0.4-1.2MPa, then subjecting reaction mixture to post-treatment to obtain the elasticity regulator A;
introducing ethylene oxide into a reactor with the elasticity regulator A with a molar ratio of ethylene oxide to the sulfur-containing compound at 2-20:1, to react for 5-8h at a reaction temperature of 100-150°C and a pressure of 0.4 -1.2MPa, then subjecting reaction mixture to post-treatment to obtain the elasticity regulator B;.
wherein the molecular formula of the sulfur-containing compound is X(CH₂)_{c}-S-S-(CH₂)_{c}X, where, X is NH₂, COOH or OH, and c is an integer from 2 to 16;
(2) preparation of copolyamide resin:
putting even dibasic acid, even diamine, odd dibasic acid or diamine, and cyclic lactam into a reactor, heating the mixture to 100-160°C, stirring at 100-500r/min, and reacting for 0.5-5h; then putting the elasticity regulator into the reactor and continuing to heat the mixture to 180-280°C, after reacting for 0.5-10h, reducing the temperature to 50-180°C, and turning on the vacuum to -0.05~-0.1MPa, removing all the distillate in the reactor, then turning off the vacuum, and then performing discharging, granulation , drying and packaging to obtain copolyamide resin.

2. The method according to claim 1, wherein the even dibasic acid is at least one selected from dodecanedioic acid, sebacic acid, suberic acid, adipic acid, succinic acid, and oxalic acid.

3. The method according to claim 1, wherein the even diamine is at least one selected from dodecane diamine, diaminodecane, diaminooctane, diaminohexane, diaminobutane, and ethylenediamine.

4. The method according to claim 1, wherein the odd dibasic acid is at least one selected from azelaic acid, pimelic acid, glutaric acid, and malonic acid.

5. The method according to claim 1, wherein the odd diamine is at least one selected from diaminononane, diaminoheptane, diaminopentane, and diaminopropane.

6. The method according to claim 1, wherein the cyclic lactam is at least one selected from enanthrolactam, caprolactam, and 2-azacyclononanone.

7. The method according to claim 1, wherein the amount of the cyclic lactam is 10-20 parts by weight.

8. The method according to claim 1, wherein the post-treatment in step (1) specifically comprises: after the reaction finishes, cooling the reaction mixture, adding phosphoric acid for neutralization until the pH is close to neutral, using a molecular sieve for filtering, moving the filtrate to a distillation device to remove the water by reduced pressure distillation.

9. A method for preparing copolyamide hot-melt yarn, comprising the following steps:
heating the copolyamide resin obtained by any one method of the claims 1 to 8 in an extruder to melt to obtain a spinning dope, subjecting the spinning dope to spinning in a spinning box, cooling the formed fiber filaments to 40-100°C by air, and then passing the fiber filament through at least one solvent tank containing elasticity regulator C, with a tank temperature of 40-80°C and residence time of the fiber filament in the tank of 0.5-60s, then moving the fiber filament out of the solvent tank, drying, drawing and shaping, and winding to obtain copolyamide hot -melt yarn;
wherein the elasticity regulator C is selected from at least one of mercapto organic acid compound and/or tributyl phosphine, wherein the mercapto organic acid compound is selected from the following: (a) mercapto organic acid, with a general formula of SH(CH₂)ₙCOOH; (b) mercapto organic acid salt, with a general formula of SH(CH₂)ₙCOOM, where M is an alkali metal element; (c) mercapto organic acid ester, with a general formula of SHCH₂COO(CH₂)ₙCH₃; wherein n is 1-10; and
the fiber filament is treated with the mercapto organic acid compound(s) and then treated with tributyl phosphine, or be placed in a mixed solvent of the mercapto organic acid compound(s) and tributyl phosphine for treatment.

10. The method according to claim 9, wherein, when the mercapto organic acid compound is liquid at 40-80°C, passing the fiber filament through a solvent tank containing a mixed solvent of tributyl phosphine and mercapto organic acid compound(s), or passing the fiber filament firstly through a solvent tank containing the mercapto organic acid compound(s) and then through a solvent tank containing tributyl phosphine or a mixed solvent of tributyl phosphine and mercapto organic acid compound(s).

11. The method according to claim 9, wherein, when the mercapto organic acid compound is mercapto organic acid salt, passing the fiber filament through a solvent tank containing an aqueous solution of the mercapto organic acid salt, and then through a solvent tank containing tributyl phosphine or a mixed solvent of tributyl phosphine and mercapto organic acid compound(s).

12. The method according to claim 9, wherein the residence time in the solvent tank is 1-30s.

13. The method according to claim 9, wherein the cooling conditions are: wind speed of 0.5-1.5 m/s, temperature of 12-20°C.

14. The method according to claim 9, wherein the speed for drawing is 500-3000 m/min.

## Patentansprüche

1. Verfahren zum Herstellen von Copolyamidharz, wobei Rohmaterialien zum Herstellen von Copolyamidharz die folgenden Komponenten beinhalten und die Menge jeder Komponente in Gewichtsteilen ausgedrückt ist:
gerade zweibasige Säure: 5-30 Teile,
gerades Diamin: 10-40 Teile,
ungerade zweibasige Säure oder ungerades Diamin: 5-15 Teile,
zyklisches Lactam: 0-30 Teile, und
Elastizitätsregler: 1-200 Teile;
wobei der Elastizitätsregler aus Elastizitätsregler A und/oder Elastizitätsregler B ausgewählt ist;
wobei das Verfahren zum Herstellen von Copolyamidharz die folgenden Schritte umfasst:
(1) Herstellen von Elastizitätsregler
Hinzufügen von Propylenoxid in einen Reaktor mit einer schwefelhaltigen Verbindung mit einem Molverhältnis von Propylenoxid zu der schwefelhaltigen Verbindung von 2-20:1, um 6-10 h bei einer Reaktionstemperatur von 120-170 °C und einem Reaktionsdruck von 0,4-1,2 MPa zu reagieren, dann Aussetzen der Reaktionsmischung einer Nachbehandlung, um den Elastizitätsregler A zu erhalten;
Einführen von Ethylenoxid in einen Reaktor mit dem Elastizitätsregler A mit einem Molverhältnis von Ethylenoxid zu der schwefelhaltigen Verbindung von 2-20:1, um 5-8 h bei einer Reaktionstemperatur von 100-150 °C und einem Druck von 0,4-1,2 MPa zu reagieren, dann Aussetzen der Reaktionsmischung einer Nachbehandlung, um den Elastizitätsregler B zu erhalten;
wobei die Molekularformel der schwefelhaltigen Verbindung X(CH₂)_{c}-S-S-(CH₂)_{c}X ist, wobei X NH₂, COOH oder OH ist, und c eine ganze Zahl von 2 bis 16 ist;
(2) Herstellen von Copolyamidharz:
Einbringen von gerader zweibasiger Säure, geradem Diamin, ungerader zweibasiger Säure oder ungeradem Diamin und zyklischem Lactam in einen Reaktor, Erhitzen der Mischung auf 100-160 °C, Rühren bei 100-500 U/Min. und Reagieren für 0,5-5 h; dann Einbringen des Elastizitätsreglers in den Reaktor und weiteres Erhitzen der Mischung auf 180-280 °C, nach dem Reagieren für 0,5-10 h, Reduzieren der Temperatur auf 50-180 °C und Einschalten des Vakuums auf -0,05 ~ -0,1 MPa, Entfernen des gesamten Destillats in dem Reaktor, dann Abschalten des Vakuums, und dann Durchführen des Ablassens, Granulierens, Trocknens und Verpackens, um Copolyamidharz zu erhalten.

2. Verfahren nach Anspruch 1, wobei die gerade zweibasige Säure zumindest eine ausgewählt aus Dodecandisäure, Sebacinsäure, Korksäure, Adipinsäure, Bernsteinsäure und Oxalsäure ist.

3. Verfahren nach Anspruch 1, wobei das gerade Diamin zumindest eines ausgewählt aus Dodecandiamin, Diaminodecan, Diaminooctan, Diaminohexan, Diaminobutan und Ethylendiamin ist.

4. Verfahren nach Anspruch 1, wobei die ungerade zweibasige Säure zumindest eine ausgewählt aus Azelainsäure, Pimelinsäure, Glutarsäure und Malonsäure ist.

5. Verfahren nach Anspruch 1, wobei das ungerade Diamin zumindest eines ausgewählt aus Diaminononan, Diaminoheptan, Diaminopentan und Diaminopropan ist.

6. Verfahren nach Anspruch 1, wobei das zyklische Lactam zumindest eines ausgewählt aus Enanthrolactam, Caprolactam und 2-Azacyclononanon ist.

7. Verfahren nach Anspruch 1, wobei die Menge des zyklischen Lactams 10-20 Gewichtsteile ist.

8. Verfahren nach Anspruch 1, wobei die Nachbehandlung in Schritt (1) insbesondere Folgendes umfasst: nachdem die Reaktion beendet ist, Abkühlen der Reaktionsmischung, Hinzufügen von Phosphorsäure zur Neutralisierung, bis der pH nahe neutral ist, Verwenden eines Molekularsiebs zum Filtern, Bewegen des Filtrats zu einer Destillationsvorrichtung, um das Wasser durch Destillation bei reduziertem Druck zu entfernen.

9. Verfahren zum Herstellen von Heißschmelzgarn aus Copolyamid, umfassend die folgenden Schritte:
Erhitzen des Copolyamidharzes, das durch ein Verfahren der Ansprüche 1 bis 8 erhalten wird, in einem Extruder zum Schmelzen, um eine Spinnlösung zu erhalten, Aussetzen der Spinnlösung gegenüber Spinnen in einer Spinnbox, Abkühlen der gebildeten Faserfilamente auf 40-100 °C durch Luft, und dann Führen des Faserfilaments durch zumindest einen Lösungsmitteltank, der Elastizitätsregler C enthält, mit einer Tanktemperatur von 40-80 °C und Verweilzeit des Faserfilaments in dem Tank von 0,5-60 s, dann Bewegen des Faserfilaments aus dem Lösungsmitteltank, Trocknen, Ziehen und Formen und Wickeln, um Heißschmelzgarn aus Copolyamid zu erhalten;
wobei der Elastizitätsregler C aus zumindest einem von Verbindung von organischer Mercaptosäure und/oder Tributylphosphin ausgewählt ist, wobei die Verbindung von organischer Mercaptosäure aus dem Folgenden ausgewählt ist: (a) organischer Mercaptosäure mit einer allgemeinen Formel von SH(CH₂)ₙCOOH; (b) Salz von organischer Mercaptosäure mit einer allgemeinen Formel von SH(CH₂)ₙCOOM, wobei M ein Alkalimetallelement ist; (c) Ester von organischer Mercaptosäure mit einer allgemeinen Formel von SHCH₂COO(CH₂)ₙCH₃; wobei n 1-10 ist; und
das Faserfilament mit der/den Verbindung(en) von organischer Mercaptosäure behandelt und dann mit Tributylphosphin behandelt wird oder zur Behandlung in ein gemischtes Lösungsmittel aus der/den Verbindung(en) von organischer Mercaptosäure und Tributylphosphin gegeben wird.

10. Verfahren nach Anspruch 9, wobei, wenn die Verbindung von organischer Mercaptosäure bei 40-80 °C flüssig ist, das Faserfilament durch einen Lösungsmitteltank geführt wird, der ein gemischtes Lösungsmittel aus Tributylphosphin und Verbindung(en) von organischer Mercaptosäure enthält, oder das Faserfilament zuerst durch einen Lösungsmitteltank geführt wird, der die Verbindung(en) von organischer Mercaptosäure enthält, und dann durch einen Lösungsmitteltank, der Tributylphosphin oder ein gemischtes Lösungsmittel aus Tributylphosphin und Verbindung(en) von organischer Mercaptosäure enthält.

11. Verfahren nach Anspruch 9, wobei, wenn die Verbindung von organischer Mercaptosäure Salz von organischer Mercaptosäure ist, das Faserfilament durch einen Lösungsmitteltank geführt wird, der eine wässrige Lösung des Salzes von organischer Mercaptosäure enthält, und dann durch einen Lösungsmitteltank, der Tributylphosphin oder ein gemischtes Lösungsmittel aus Tributylphosphin und Verbindung(en) von organischer Mercaptosäure enthält.

12. Verfahren nach Anspruch 9, wobei die Verweilzeit in dem Lösungsmitteltank 1-30 s ist.

13. Verfahren nach Anspruch 9, wobei die Kühlbedingungen wie folgt sind: Windgeschwindigkeit von 0,5-1,5 m/s, Temperatur von 12-20 °C.

14. Verfahren nach Anspruch 9, wobei die Geschwindigkeit zum Ziehen 500-3000 m/Min. ist.

## Revendications

1. Procédé de préparation d'une résine de copolyamide, les matières premières de préparation de la résine de copolyamide comprenant les constituants suivants, et la quantité de chaque constituant étant exprimée en parties en poids :
acide dibasique pair : 5 à 30 parties,
diamine paire : 10 à 40 parties,
acide dibasique ou diamine impair(e) : 5 à 15 parties,
lactame cyclique : 0 à 30 parties, et
régulateur d'élasticité : 1 à 200 parties ;
ledit régulateur d'élasticité étant choisi parmi un régulateur d'élasticité A et/ou un régulateur d'élasticité B ;
ledit procédé de préparation d'une résine de copolyamide comprenant les étapes suivantes :
(1) préparation d'un régulateur d'élasticité
ajout d'un oxyde de propylène dans un réacteur avec un composé contenant du soufre avec un rapport molaire d'oxyde de propylène au composé contenant du soufre de 2 à 20:1, pour faire réagir pendant 6 à 10 h à une température de réaction de 120 à 170°C et une pression de réaction de 0,4 à 1,2 MPa, puis soumission du mélange réactionnel à un post-traitement pour obtenir le régulateur d'élasticité A ;
introduction d'oxyde d'éthylène dans un réacteur avec le régulateur d'élasticité A avec un rapport molaire d'oxyde d'éthylène au composé contenant du soufre de 2 à 20:1, pour faire réagir pendant 5 à 8 h à une température de réaction de 100 à 150°C et une pression de 0,4 à 1,2 MPa, puis soumission du mélange réactionnel à un post-traitement pour obtenir le régulateur d'élasticité B ;
la formule moléculaire du composé contenant du soufre étant X(CH₂)_{c}-S-S-(CH₂)_{c}X, où X représente un groupe NH₂, COOH ou OH, et c représente un entier allant de 2 à 16;
(2) préparation d'une résine de copolyamide :
placement d'un acide dibasique pair, d'une diamine paire, d'un acide dibasique ou d'une diamine impair(e) et d'un lactame cyclique dans un réacteur, chauffage du mélange jusqu'à 100 à 160°C, agitation à 100 à 500 rpm, et réaction pendant 0,5 à 5 h ; puis placement du régulateur d'élasticité dans le réacteur et poursuite du chauffage du mélange à 180 à 280°C, après réaction pendant 0,5 à 10 h, réduction de la température jusqu'à 50 à 180°C, et activation du vide jusqu'à -0,05 à environ -0,1 MPa, suppression de tout le distillat dans le réacteur, puis désactivation du vide et ensuite exécution du déchargement, de la granulation, du séchage et du conditionnement pour obtenir une résine de copolyamide.

2. Procédé selon la revendication 1, ledit acide dibasique pair étant au moins l'un choisi parmi l'acide dodécanedioïque, l'acide sébacique, l'acide subérique, l'acide adipique, l'acide succinique et l'acide oxalique.

3. Procédé selon la revendication 1, ladite diamine paire étant au moins l'une choisie parmi la dodécanediamine, le diaminodécane, le diaminooctane, le diaminohexane, le diaminobutane et l'ethylènediamine.

4. Procédé selon la revendication 1, ledit acide dibasique impair étant au moins l'un choisi parmi l'acide azélaïque, l'acide pimélique, l'acide glutarique et l'acide malonique.

5. Procédé selon la revendication 1, ladite diamine impaire étant au moins l'une choisie parmi le diaminononane, le diaminoheptane, le diaminopentane et le diaminopropane.

6. Procédé selon la revendication 1, ledit lactame cyclique étant au moins l'un choisi parmi l'énanthrolactame, le caprolactame et la 2-azacyclononanone.

7. Procédé selon la revendication 1, ladite quantité de lactame cyclique étant de 10 à 20 parties en poids.

8. Procédé selon la revendication 1, ledit post-traitement à l'étape (1) comprenant en particulier : après la fin de la réaction, le refroidissement du mélange réactionnel, l'ajout d'acide phosphorique pour la neutralisation jusqu'à ce que le pH soit proche de neutre, l'utilisation d'un tamis moléculaire pour filtrer, l'envoi du filtrat dans un dispositif de distillation pour enlever l'eau par distillation sous pression réduite.

9. Procédé de préparation d'un fil de copolyamide thermofusible, comprenant les étapes suivantes :
le chauffage de la résine de copolyamide obtenue par l'un quelconque des procédés selon les revendications 1 à 8 dans une extrudeuse à faire fondre pour obtenir une solution de filage, la soumission de la solution de filage à un filage dans une boîte à filage, le refroidissement des filaments de fibre formés jusqu'à 40 à 100°C par de l'air, et ensuite le passage du filament de fibre à travers au moins une cuve de solvant contenant un régulateur d'élasticité C, avec une température de cuve de 40 à 80°C et un temps de séjour du filament de fibre dans la cuve de 0,5 à 60 s, puis envoi du filament de fibre à l'extérieur de la cuve de solvant, séchage, étirage et façonnage, et enroulement pour obtenir un fil de copolyamide thermofusible ;
ledit régulateur d'élasticité C étant choisi parmi au moins l'un d'un composé d'acide organique mercapto et/ou de la tributyle phosphine, ledit composé d'acide organique mercapto étant choisi parmi les suivants :
(a) un acide organique mercapto, avec une formule générale de SH(CH₂)ₙCOOH ;
(b) un sel d'acide organique mercapto, avec une formule générale de SH(CH₂)ₙCOOM, où M représente un élément de métal alcalin ;
(c) un ester d'acide organique mercapto, avec une formule générale de SHCH₂COO(CH₂)ₙCH₃, où n vaut de 1 à 10 ; et
le filament de fibre est traité avec un ou plusieurs composés d'acide organique mercapto et puis traité avec de la tributyle phosphine, ou est placé dans un solvant mixte du ou des composés d'acide organique mercapto et de la tributyle phosphine en vue d'un traitement.

10. Procédé selon la revendication 9, lorsque le composé d'acide organique mercapto est liquide à 40 à 80°C, le passage du filament de fibre à travers une cuve de solvant contenant un solvant mixte de tributyle phosphine et d'un ou plusieurs composés d'acide organique mercapto ou le passage du filament de fibre tout d'abord à travers une cuve de solvant contenant le ou les composés d'acide organique mercapto et ensuite à travers une cuve de solvant contenant de la tributyle phosphine ou un solvant mixte de tributyle phosphine et d'un ou plusieurs composés d'acide organique mercapto.

11. Procédé selon la revendication 9, lorsque le composé d'acide organique mercapto est un sel d'acide organique mercapto, le passage du filament de fibre à travers une cuve de solvant contenant une solution aqueuse de sel d'acide organique mercapto, et ensuite à travers une cuve de solvant contenant de la tributyle phosphine ou un solvant mixte de tributyle phosphine et d'un ou plusieurs composés d'acide organique mercapto.

12. Procédé selon la revendication 9, ledit temps de séjour dans la cuve de solvant étant de 1 à 30 s.

13. Procédé selon la revendication 9, lesdites conditions de refroidissement étant : vitesse du vent de 0,5 à 1,5 m/s, température de 12 à 20°C.

14. Procédé selon la revendication 9, ladite vitesse d'étirage étant de 500 à 3000 m/min.
